# EUROPÄISCHE PATENTANMELDUNG

(11) **EP 2 140 832 A1**
(43) Veröffentlichungstag der Anmeldung: **06.01.2010**
(21) Anmeldenummer: 09160933.9
(22) Anmeldetag: 22.05.2009
(51) Int. Cl.: A61C 13/15, A61C 19/00

(54) **Gerät zum Lichthärten eines Dentalobjekts**

(30) Priorität: 01.07.2008 DE 102008031094
(71) Anmelder: Ivoclar Vivadent AG, 9494 Schaan (LI)
(72) Erfinder: Senn, Bruno, CH-9470, Buchs (CH); Plank, Wolfgang, AT-6830, Rankweil (AT); Rohner, Gottfried, CH-9450, Altstätten (CH)
(74) Vertreter: Baronetzky, Klaus

(57) **Zusammenfassung**

Die Erfindung betrifft ein Gerät zum Bestrahlen eines Objektes, insbesondere zum lichthärten eines Dentalobjekts, mittels einer ersten Strahlung mit mindestens einer Strahlenquelle zum Aussenden der ersten Strahlung, und mit mindestens einem Strahlensensor zum Messen einer zweiten Strahlung. Die zweite Strahlung ist die erste Strahlung, die vom Objekt reflektiert wird.

## Beschreibung

Die Erfindung betrifft ein Gerät zum Bestrahlen eines Objektes, insbesondere Dentalobjekts, mittels einer Strahlung, gemäß dem Oberbegriff des Anspruchs 1, ein Behandlungsset zum Bestrahlen eines Objektes gemäß dem Oberbegriff des Anspruchs 12 und ein Verfahren zum Härten eines Objektes, gemäß dem Oberbegriff des Anspruchs 14.

Zum Aushärten von zahntechnischen Füllungsmaterialien, die zu Restaurationszwecken bei natürlichen Zähnen, aber auch bei separat angefertigten Zahnsätzen, verwendet werden, wird Strahlung mit hohem UV-Anteil eingesetzt.

Zu gängigen Füllungsmaterialien gehören Kunststoffe, die mit elektromagnetischer Strahlung in materialabhängigen Wellenlängenbereichen (Licht) gehärtet werden können. Voraussetzung für eine optimale Polymerisation des Kunststoffes ist das Einbringen einer notwendigen Lichtmenge, die sich aus der Lichtleistung mal der Exponierungszeit ergibt.

Bei der Anwendung des Lichtes muss der Bediener die Lichtquelle präzise über dem Füllungsmaterial positionieren. Wenn neben das Füllungsmaterial gezielt wird, wird dem Füllungsmaterial zu wenig Licht zugeführt. Das hat dann zur Folge, dass die notwendige Lichtmenge zum Aushärten des Füllungsmaterials nicht mehr gegeben ist.

Herkömmliche Systeme weisen zur Unterstützung bei der Positionierung der Lichtquelle orange Filtergläser auf, welche das Licht dämpfen, und so dass sichtbar ist, auf welche Stelle, beispielsweise im Mundbereich, das Licht fällt. Die orangen Filtergläser sind jedoch umständlich zu handhaben und machen die Anwendung der Lichtquelle kompliziert. Darüber hinaus gibt es Situationen, in denen eine Feststellung der korrekten Positionierung der Lichtquelle überhaupt nicht möglich ist.

Moderne Zahnbearbeitungsgeräte, die mit einem energiereichen Laserstrahl Material von einem Zahn abtragen, sind in der Lage, basierend auf einer durch die Materialabtragung entstehenden Plasmastrahlung eine Positionsbestimmung vorzunehmen. Dabei enthält Intensität dieser Plasmastrahlung alle Informationen über den Abstand zwischen Zahn und Zahnbearbeitungsgerät. Basierend auf diesen Informationen kann das Zahnbearbeitungsgerät automatisch abgeschaltet werden, wenn es zu weit vom Zahn entfernt ist.

Beim Härten von Füllungsmaterialien entsteht jedoch keine Strahlung, mit der man die Position der Strahlungsquelle bestimmen könnte.

Es ist demgegenüber Aufgabe der Erfindung, ein Gerät zum Bestrahlen oder Härten eines Objektes gemäß dem Oberbegriff von Anspruch 1, ein medizinisches Behandlungsset zum Bestrahlen oder Härten eines Objektes gemäß dem Oberbegriff von Anspruch 12 und ein Verfahren zum Bestrahlen oder Härten eines Objektes gemäß dem Oberbegriff von Anspruch 14 anzugeben, bei denen die Position einer Strahlungsquelle besser bestimmt werden kann.

Die Aufgabe wird erfindungsgemäß durch die Merkmale der unabhängigen Ansprüche gelöst. Vorteilhafte Weiterbildungen ergeben sich aus den Unteransprüchen.

Der Erfindung liegt der Gedanke zugrunde, dass zur Bestimmung einer relativen Position einer Strahlenquelle bezüglich eines Objektes nicht unbedingt eine vom Objekt erzeugte Strahlung notwendig ist. Vielmehr kann auch die von der Strahlenquelle ausgegebene und vom Objekt reflektierte Strahlung ausgenutzt werden. Überraschend hat sich herausgestellt, dass die Strahlung einer Strahlenquelle bei der Reflexion vom Objekt in typischer Weise verändert wird. Diese typische Änderung ermöglicht eine horizontale Lagebestimmung der Strahlenquelle, da sich beispielsweise im Mundraum eines Patienten verschiedene Objekte befinden, die sich vom beaufschlagten Objekt unterscheiden, und die die Strahlung der Strahlenquelle in verschiedener Weise eigentypisch verändern.

Es kann damit beispielsweise auf einfache Weise geprüft werden, ob sich die Strahlenquelle über einem zu härtenden Füllungsmaterial befindet. Weiter ist es möglich, über die Laufzeit der Strahlung oder die gemessene reflektierte Lichtleistung festzustellen, wie weit die Strahlenquelle vom Objekt entfernt ist.

Erfindungsgemäß ist ein besonderes Gerät zum Bestrahlen eines Objektes mittels einer ersten Strahlung mit mindestens einer Strahlenquelle vorgesehen, bei dem die Strahlenquelle die erste Strahlung aussendet, welche vom Objekt als eine zweite Strahlung reflektiert wird. Hierbei erfasst mindestens ein Strahlensensor die zweite Strahlung.

Durch die Erfassung der vom Objekt reflektierten Strahlung kann diese für einen Benutzer des Gerätes sichtbar dargestellt werden. Der Vorteil liegt darin, dass durch das Gerät der vorliegenden Erfindung die Position der Strahlenquelle manuell oder automatisch bestimmt werden kann. Bei einer manuellen Positionsbestimmung kann der Benutzer anhand der gemessenen Strahlung durch den Strahlensensor erkennen, wie der Strahlensensor und damit das Gerät relativ zum Objekt angeordnet ist. Bei der automatischen Positionsbestimmung sind weitere Verbesserungen möglich, wie beispielsweise eine automatische Einstellung der ersten Strahlung.

Die Erfindung lässt sich besonders vorteilhaft auf dem Gebiet der Dentaltechnik einsetzen. Hierbei strahlt die Strahlenquelle ein energiereiches Licht zum Härten eines dentalen Füllungsmaterials ab und ist vorzugsweise eine Laser- oder Leuchtdiode. Die meisten dentalen Füllungsmaterialen werden im kurzwelligen Blaulichtbereich heller dargestellt als Dentin. Damit braucht mit dem Strahlensensor lediglich ermittelt zu werden, ob die reflektierte Strahlung sehr hell ist. Dies zeigt an, dass die Strahlenquelle über dem Füllungsmaterial positioniert ist.

Erfindungsgemäß besonders günstig ist der Strahlensensor in einem Wellenlängenbereich besonders empfindlich, der der von der Strahlenquelle emittierten ersten Strahlung entspricht. Mit dieser Maßnahme lässt sich der Messbereich schon durch die technischen Mittel einschränken, so dass die technische Realisierung des Gerätes besonders einfach ist.

Erfindungsgemäß besonders günstig ist es, wenn das erfindungsgemäße Gerät mit einer Ausgabeeinrichtung zum Ausgeben menschlich wahrnehmbarer Informationen versehen ist. Die Informationen können beispielsweise Bilder, Töne oder Vibrationen sein. Die Informationen werden basierend auf den Signalen erzeugt, die der Strahlensensor ausgibt.

Erfindungsgemäß besonders günstig ist die Erfassung der Intensität der zweiten Strahlung. Wie bereits diskutiert, reflektieren verschiedene Objekte Strahlung mit unterschiedlichen Eigenschaften. Diese Eigenschaften können beispielsweise die Streuung oder der Reflexionsgrad sein. Das erfindungsgemäße Gerät erlaubt es, die Positionsbestimmung relativ zum bestrahlten Objekt vorzunehmen ist, wobei es möglich ist, lediglich die Intensität der reflektierten Strahlung auszuwerten. Einerseits gibt die Intensität unmittelbar Auskunft über die Eigenschaften des Objektes selbst, da verschiedene Objekte die erste Strahlung der Strahlenquelle mit verschiedenen Intensitäten reflektieren. Die Intensität lässt sich aber auch Abstandsinformationen zwischen Strahlenquelle und Objekt entnehmen.

Erfindungsgemäß besonders günstig ist eine Ausgabeeinrichtung, die die wahrnehmbaren Informationen basierend auf einem Vergleich mit mindestens einem Referenzwert hervorhebt. Dabei ist ein Referenzwert vorzugsweise ein Messwert, der mit dem Strahlensensor für ein vorbestimmtes Objekt erfasst wurde. Durch die hervorgehobene Information, wie beispielsweise eine optisch besonders günstige Ausgabe, einen hellen Ton, ein Vibrieren oder jede andere hervorhebende Signalisierung, ist ein Benutzer des Gerätes sofort in der Lage zu erkennen, wann sich das Gerät über einem gewünschten Objekt, wie dem Füllungsmaterial, befindet. Somit ist die optimale Position des Geräts unmittelbar zu erkennen. Damit kann gerade für ungeübte Benutzer eine lange Einarbeitungsphase vermieden werden, da das Gerät nahezu selbsterklärend ist.

Erfindungsgemäß besonders günstig ist es, die Messwerte zur Einstellung des Gerätes zu verwenden. Dabei weist das Gerät eine Einstelleinrichtung auf, die vorzugsweise den Abstand zwischen Strahlensensor und Objekt basierend auf der zweiten Strahlung bestimmt. Basierend auf diesem Abstand kann die Einstelleinrichtung die Systemparameter des Gerätes einstellen. Diese sind vorzugsweise die emittierte Lichtleistung und die Einschaltdauer der Strahlenquelle. Da die vom Objekt aufgenommene Lichtmenge einer Strahlenquelle sich stärker in Abhängigkeit von Abstand zum bestrahlenden Objekt verändert, ist diese Lösung besonders effektiv, um Verluste zu reduzieren. Dies spart nicht nur Energie und verhindert eine unnötige Erwärmung des Geräts, sondern stellt auch sicher, dass dem Objekt die für die Polymerisation benötigte Lichtmenge zugeführt wird.

Erfindungsgemäß besonders günstig ist eine Mehrfachanordnung von Strahlensensoren. Bei der Härtung eines Zahnfüllungsmaterials kann diese Mehrfachanordnung haubenförmig ausgebildet sein, um die Bestrahlung des Füllungsmaterials zu erfassen. Ist der Strahlensensor in einer solchen Mehrfachanordnung aufgenommen, so ist die Erfindung besonders effektiv, da eine haubenförmige Mehrfachanordnung von Lichtquellen meist die freie Sicht auf das zu bearbeitenden Objekt blockiert.

In einer weiteren vorteilhaften Ausgestaltung ist es vorgesehen, dass die Strahlenquelle vorzugsweise von wenigstens einer Laser- oder Leuchtdiode gebildet ist, wobei jede Leuchtdiode wenigstens einen LED-Chip aufweist.

In einer weiteren vorteilhaften Ausgestaltung ist es vorgesehen, dass die Strahlenquelle und der mindestens eine Strahlensensor am Gehäuse angeordnet oder Teil eines lösbar an dem Gehäuse anordbaren Aufsatzes ist.

In einer weiteren vorteilhaften Ausgestaltung ist es vorgesehen, dass die Strahlenquelle erste Strahlen mit einer Wellenlänge von 320 nm bis 750 nm emittiert.

In einer weiteren vorteilhaften Ausgestaltung ist es vorgesehen, dass der Strahlensensor in einem Wellenlängenbereich der von der Strahlenquelle emittierten, ersten Strahlen empfindlich ist.

In einer weiteren vorteilhaften Ausgestaltung ist es vorgesehen, dass wenigstens einer der Strahlensensoren ein Bildsensor ist, mit dem wenigstens ein Bild des Objektes aufnehmbar ist.

In einer weiteren vorteilhaften Ausgestaltung ist es vorgesehen, dass ein zweiter oder mehrere Strahlensensoren vorgesehen sind, die relativ zum ersten Strahlensensor beabstandet in der gleichen Ebene und/oder im Winkel zu diesem angeordnet sind.

In einer weiteren vorteilhaften Ausgestaltung ist es vorgesehen, dass das Gerät eine Ausgabeeinrichtung zum Ausgeben von wahrnehmbaren Informationen aufweist.

In einer weiteren vorteilhaften Ausgestaltung ist es vorgesehen, dass die wahrnehmbaren Informationen auf wenigstens einem Messwert wenigstens eines Strahlensensors basieren, wobei der Messwert, insbesondere die Intensität der zweiten Strahlung angibt oder mit wenigstens einem Referenzwert verglichen wird.

In einer weiteren vorteilhaften Ausgestaltung ist es vorgesehen, dass die Ausgabeeinrichtung in Form eines am Gerät angeordneten Bildschirmes ausgebildet ist und/oder die Ausgabeeinrichtung die Information optisch und/oder akustisch und/oder spürbar ausgibt.

In einer weiteren vorteilhaften Ausgestaltung ist es vorgesehen, dass das Gerät aus der zweiten Strahlung den Abstand zur Reflexionoberfläche bestimmt.

In einer weiteren vorteilhaften Ausgestaltung ist ein Gerät nach einem der Ansprüche 1 bis 11 zum Anzeigen der gemessenen Strahlung mindestens eines Strahlensensors vorgesehen.

In einer weiteren vorteilhaften Ausgestaltung ist es vorgesehen, dass eine Ladestation zum Aufladen und/oder Lagern des Gerätes vorgesehen ist.

In einer weiteren vorteilhaften Ausgestaltung sind die folgenden Schritte vorgesehen:
Bestrahlen des Dentalobjektes mit einer Strahlenquelle;
Messen der reflektierten Strahlung; und
Erfassen einer reflektierten Strahlung; und Erfassen einer relativen Position der Strahlenquelle zum Dentalobjekt basierend auf dem reflektierten Licht.

Weiter Vorteile, Einzelheiten und Merkmale ergeben sich aus der nachstehenden Beschreibung von sechs Ausführungsbeispielen der Erfindung anhand der Zeichnungen.

Es zeigen:
- Fig. 1: ein erstes Ausführungsbeispiel der Erfindung in schematischer Darstellung;
- Fig. 2: ein zweites Ausführungsbeispiel der Erfindung in schematischer Darstellung mit einer Ladestation;
- Fig. 3: ein drittes Ausführungsbeispiel der Erfindung in schematischer Darstellung in Haubenform;
- Fig. 4: ein viertes Ausführungsbeispiel der Erfindung in schematischer Darstellung in U-Form; und
- Fig. 5: ein fünftes Ausführungsbeispiel der Erfindung in schematischer Darstellung in Bogenform.

Das erfindungsgemäße Gerät und das zu bestrahlende Objekt sind in allen bevorzugten Ausführungsformen als Polymerisationslampe und als ein dentales Füllungsmaterial ausgebildet. Das Material der Füllung ist Kunststoff und zunächst weich. Gehärtet wird der für den Restaurationsvorgang verwendeter Kunststoff mit einer Strahlung, die im vorliegenden Ausführungsbeispiel eine energiereiche Strahlung mit einem vergleichsweise großen spektralen Blauanteil ist.

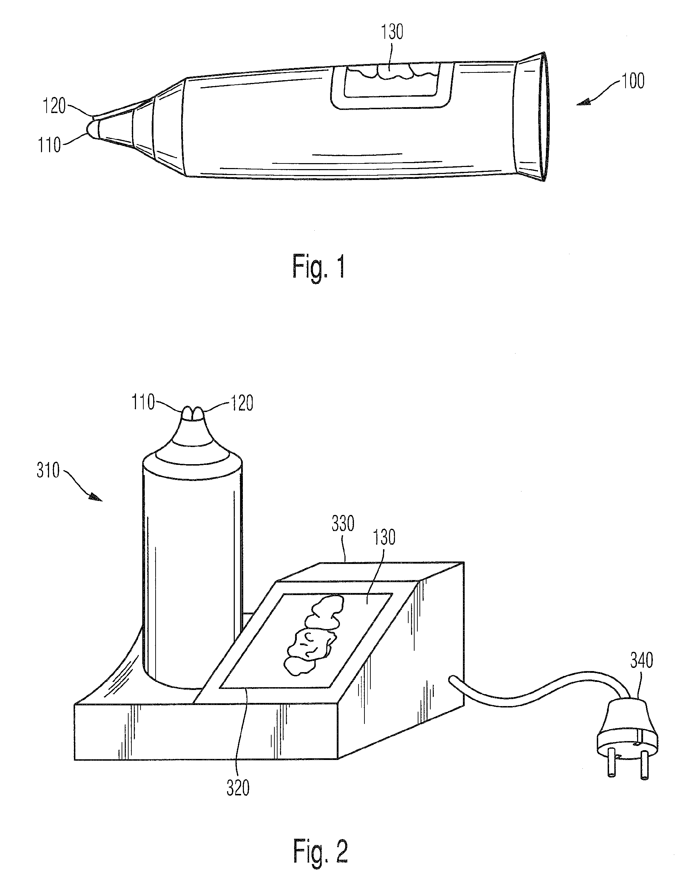

Fig. 1 zeigt eine Polymerisationslampe 100 mit einer Strahlenquelle 110 und einem Strahlensensor 120.

Die Strahlenquelle 110 ist in allen Ausführungsbeispielen eine lichtemittierende Diode, kurz LED 110. Dies soll jedoch nicht einschränkend verstanden werden, da dem Fachmann auch andere geeignete Strahlenquellen, wie beispielsweise Halogenlampen, Xenonlampen oder Laserdioden bekannt sind. Im Betrieb gibt die LED 100 ein Licht mit hohem Blauanteil ab, womit der Kunststoff bestrahlt und gehärtet wird. Die Wirksamkeit der Durchhärtung des Füllungsmaterials durch die LED 110 hängt entscheidend vom Geschick des Benutzers ab. Trifft der Benutzer mit dem Lichtstrahl exakt das Kunststoff-Füllungsmaterial, so muss die LED 110 weniger Energie zum vollständigen Aushärten abgeben, als wenn der Benutzer etwas außermittig auf die Füllung zielt. Ein besonderes Problem ist, dass in diesem Fall keine Informationen zur Verfügung stehen, wie viel Strahlungsenergie die Füllung ausgesetzt war. Beispielsweise können Teilbereiche der Füllung mit ausreichender Lichtleistung beaufschlagt sein, aber andere Teilbereiche nicht. Der Benutzer konnte bislang nicht erkennen, inwieweit die Füllung bereits ausgehärtet ist. Letztendlich führte eine falsche Abschätzung zu einer unvollständig ausgehärteten Zahnfüllung.

Um diese Probleme zu vermeiden, ist erfindungsgemäß der Strahlensensor 120 in der Polymerisationslampe 100 so eingebaut, dass er in die gleiche Richtung wie die LED 110 ausgerichtet ist. So fängt er das von der Füllung reflektierte Licht auf und erzeugt basierend auf den Eigenschaften des reflektierten Lichtes ein Signal.

Dieses Signal lässt zur Information des Benutzers verwenden. Bevorzugt wird das Signal des Strahlensensors 120 zur Positionsbestimmung eingesetzt.

In einer ersten Ausführungsform ist der Strahlensensor 120 als Kamera 120 ausgebildet. Die Bilder, die die Kamera 120 aufnimmt, können auf einem Bildschirm 130 dargestellt werden. Dies eröffnet zunächst die Möglichkeit, dass der Zahnarzt oder sonstige Benutzer sich bei Bedarf durch einen kurzen Blick auf den Bildschirm vergewissern kann, wie das Restaurationsergebnis sich optisch darstellt, und zwar sogar während des Härtungsvorgangs. Typischerweise erkennt ein erfahrener Zahnarzt die Polymerisation und kann bereits durch kurze visuelle Beurteilung feststellen, wie weit die Polymerisation fortgeschritten ist.

Erfindungsgemäß ist es in diesem Zusammenhang besonders günstig, dass auf die Zwischenschaltung eines Orangefilters verzichtet werden kann, so dass die volle Lichtleistung und das volle Spektrum für die Beurteilung zur Verfügung steht.

Der Strahlensensor 120 kann anstelle einer CCD-Einheit auch einfach auch als photoempfindlicher Transistor ausgebildet sein. Dabei trifft die reflektierte Lichtstrahlung auf den Transistor und erhöht oder erniedrigt den Widerstand des Transistors. Die Intensität der reflektierten Strahlung beeinflusst damit den Widerstand des Phototransistors, dessen Ausgangssignal ausgewertet wird. Bei dieser Lösung lässt sich die Tatsache ausnutzen, dass Kunststoff als Füllungsmaterial Licht mit hohem Blauanteil mit einer höheren Intensität reflektiert als der zu restaurierende Zahn selbst. Bei einem NPN-Phototransistor würde das vom Füllungsmaterial reflektierte Licht einen niedrigeren Widerstand erzeugen als das vom Zahn selbst reflektierte Licht. Der Phototransistor kann beispielsweise in einer Messbrücke verschaltet sein, und über eine entsprechende Auswerteschaltung ist damit abschätzbar, ob und in welchem Umfang das zu härtende Restaurationsmaterial von der ersten Strahlung beaufschlagt ist.

Auch die Kamera 120 lässt sich ohne Weiteres zur Beurteilung der Intensität der reflektierten Lichtstrahlung einsetzen. Die von der ersten Strahlung beaufschlagten Teilbereiche des Füllungsmaterials reflektieren die Lichtstrahlung intensiver, so dass dort von der Kamera 120 hellere Bildbereiche dargestellt werden. Diese helleren Bildbereiche lassen sich nicht nur auf einen Bildschirm darstellen, sondern mit einer entsprechenden Auswerteschaltung auch auswerten, um zu bestimmen, ob und in welchem Umfang das Füllungsmaterial von der ersten Strahlung beaufschlagt wird.

Bei einer alternativen Ausführungsform der Erfindung wird die von dem Objekt reflektierende Lichtstrahlung ausgewertet und mit einem ersten und einem zweiten Referenzwert verglichen. Wenn die ausgewertete Lichtstahlung den ersten Referenzwert überschreitet, erfolgt eine Signalisierung, dass die Position des Lichthärtgeräts zutreffend gewählt ist. Wenn die reflektierte Lichtstrahlung unterhalb des ersten Referenzwerts oder oberhalb des zweiten Referenzwerts liegt, wird eine geeignete Warnung abgeben, beispielsweise auf dem Bildschirm 130, um den Zahnarzt zu informieren, dass die entsprechenden Fehlerzustände vorliegen. Ein entsprechendes Warnsignal kann akustisch ausgegeben werden.

Hierbei kann durch visuelle Beurteilung auf dem Bildschirm der Abstand zur Oberfläche des Restaurationsmaterials ermittelt werden. Alternativ kann aus der absoluten Größe der zweiten Strahlung der Abstand ermittelt werden, denn die Intensität der reflektierten Strahlung sinkt mit zunehmenden Abstand von der Beaufschlagungsoberfläche.

Alternativ oder zusätzlich kann der Strahlensensor 120 auch zur Abstandbestimmung zwischen Polymerisationslampe 100 und Strahlensensor 120 eingesetzt werden.

Vorzugsweise weist der Strahlensensor 120 eine spektrale Empfindlichkeit auf, die mit dem Emissions-Wellenlängenbereich der LED 110 eine große Überlappung aufweist. Die Notwendigkeit, Filter einzusetzen, entfällt damit.

In einer weiteren bevorzugten Ausgestaltung können mehrere winklig zueinander stehende Strahlensensoren 120 eingebaut sein, die zur Positions- und/oder Abstandsbestimmung vorgesehen sind. Dies wird weiter unten im Einzelnen erläutert.

Fig. 2 zeigt eine Polymerisationslampe 310 gemäß einem zweiten Ausführungsbeispiel der Erfindung. Auch im zweiten Ausführungsbeispiel sind alle funktionellen Merkmale aus dem ersten Ausführungsbeispiel in die Polymerisationslampe 310 integrierbar.

Im Weiteren ist die Polymerisationslampe 310 in einer Ladevorrichtung 330 aufgenommen. Diese Ladevorrichtung 330 kann zum Aufladen eines nicht gezeigten Akkumulators der Polymerisationslampe 310 vorgesehen sein. Dafür weist die Ladevorrichtung 330 eine Energieversorgung 340 in Form eines Steckers auf, wobei der Stecker in eine Steckdose des öffentlichen Energieversorgernetzes einsteckbar ist. Des Weiteren braucht die Ladevorrichtung 330 auch entsprechende Transformatoren, um die Spannung aus dem Energieversorgernetz in eine passende Ladespannung für den Akkumulator umzuwandeln.

Weiter kann die Ladevorrichtung 330 auch einen Bildschirm 320 aufweisen, der zum Darstellen der ermittelten Positionsdaten und Abstandsdaten geeignet ist. Diese Daten können auch auf einem nicht gezeigten Speicher in der Ladevorrichtung 330 hinterlegt werden.

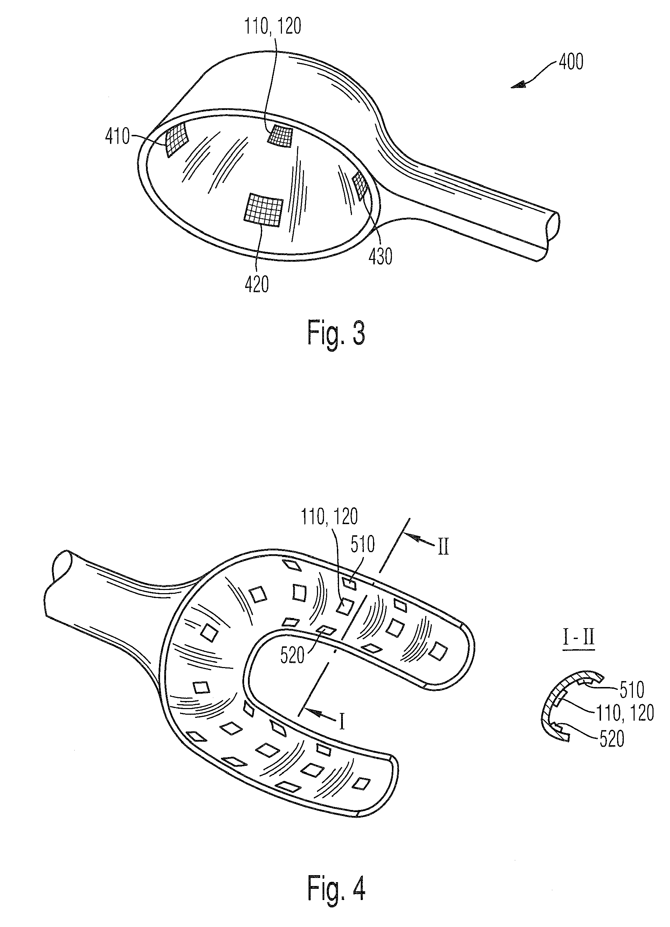

Fig. 3 zeigt eine Sensor-Mehrfachanordnung 400 für die Polymerisationslampe gemäß einem dritten Ausführungsbeispiel der Erfindung.

Danach ist die LED 110 und die Kamera 120 oben in die Kuppel einer Haube 400 eingebaut, die über einen zu behandelnden natürlichen oder künstlichen Zahn gehalten werden kann. Der Vorteil einer derartigen Haube ist, dass das Licht aus der LED 110 an den Wänden der Haube reflektiert werden kann, um es zum Härten des im Zahn eingesetzten Füllungsmaterials effektiver einzusetzen.

Bei dem Einsatz der Haube 400 wird die Sicht auf das Füllungsmaterial beim Härten verdeckt. Durch den Einsatz der Erfindung ist es nun jedoch möglich, die richtige Positionierung und den richtigen Abstand zwischen den LEDs 110, der Haube und dem Füllungsmaterial vorzunehmen. Insofern lässt sich mit der erfindungsgemäßen Positionsbestimmung bei dieser Ausführungsform mit der Haube 400 der besondere Vorteil erzielen, dass eine exakt definierte und energiereiche Lichtstrahlung in genau vorgegebener Position dem Füllungsmaterial zugeführt wird.

In weiterer Ausgestaltung der Haube 400 weist diese weitere Kameras 410, 420, 430 an ihrem Innenrand auf. Diese stehen im Wesentlichen rechtwinklig zur Kamera 120 oben in der Haube 400.

Durch diese Anordnung der Kameras 410 bis 430 ist es möglich, die exakte Position der Haube 400 zu bestimmen, bevor die Strahlungsquelle 110 eingeschaltet wird. Hierdurch ist auch eine visuelle Beurteilung der Dentalrestauration möglich, und auf dem Bildschirm lässt sich die relative Positionierung und die visuelle Ausgestaltung der aktuellen Situation in deutlich vergrößerter Form und damit klar ersichtlich darstellen.

Fig. 4 zeigt eine modifizierte Mehrfachanordnung von Sensoren und Strahlungsquellen für eine Polymerisationslampe gemäß einem vierten Ausführungsbeispiel der Erfindung. Bei dieser Ausführungsform ist mindestens eine LED 110 und eine Kamera 120 im oberen Bereich einer Haube 500 eingebaut, wobei die Ausgestaltung der Haube 500 im Wesentlichen einem vertikal ausgerichteten U entspricht und insofern entlang eines Zahnsatzes beliebig positionierbar ist. Vorzugsweise weist die Haube 500 eine Vielzahl von LEDs 110 und Kameras 120 auf, wobei ein Paar aus LED 110 und Kamera 120 über einem Zahn positionierbar ist.

Im Wesentlichen rechtwinklig zu den weiteren Kameras 120 können weitere Kameras 510, 520 am Innenrand der Haube 500 angeordnet sein. Dies ist in der Schnittdarstellung in Fig. 4 ersichtlich.

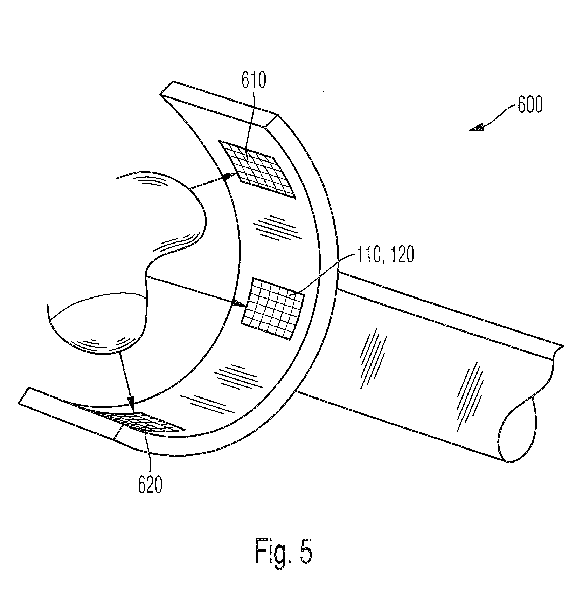

Bei einer weiter modifizierten Ausführungsform gemäß Fig. 5 kann eine besonders ausgebildete Mehrfachanordnung von LEDs 110 und Sensoren 120 verwendet werden. Bei dieser Ausgestaltung ist die Gesamtform so ausgebildet, dass sie einen Zahnsatz natürlicher oder künstlicher Zähne vollständig abdeckt, und zwar recht eng, wobei die Haubenform sich im Wesentlich im Schnitt betrachtet als halbkreisförmig über den betreffenden Zahn erstreckt. Hierbei ist eine Mehrzahl von Lichtquellen und Sensoren in beliebiger und geeigneter Weise angebracht, und die emittierte Lichtleistung sorgt für eine gleichmäßige und helle Ausleuchtung des gesamten Zahnsatzes.

## Patentansprüche

1. Gerät zum Lichthärten eines Dentalobjektes, mittels einer ersten Strahlung, mit mindestens einer Strahlenquelle, zum Aussenden der ersten Strahlung mit mindestens einem Strahlensensor zum Messen wenigstens einer zweiten Strahlung und einem Gehäuse, **dadurch gekennzeichnet, dass** die zweite Strahlung die vom Objekt reflektierte erste Strahlung ist.

2. Gerät nach Anspruch 1, **dadurch gekennzeichnet, dass** die Strahlenquelle (110) vorzugsweise von wenigstens einer Laser- oder Leuchtdiode gebildet ist, wobei jede Leuchtdiode wenigstens einen LED-Chip aufweist.

3. Gerät nach Anspruch 1 oder 2, **dadurch gekennzeichnet, dass** die Strahlenquelle (110) und der mindestens eine Strahlensensor am Gehäuse angeordnet oder Teil eines lösbar an dem Gehäuse anordbaren Aufsatzes ist.

4. Gerät nach einem der vorhergehenden Ansprüche, **dadurch gekennzeichnet, dass** die Strahlenquelle (110) erste Strahlen mit einer Wellenlänge von 320 nm bis 750 nm emittiert.

5. Gerät nach einem der vorhergehenden Ansprüche, **dadurch gekennzeichnet, dass** der Strahlensensor (120) in einem Wellenlängenbereich der von der Strahlenquelle emittierten, ersten Strahlen empfindlich ist.

6. Gerät nach einem der vorhergehenden Ansprüche, **dadurch gekennzeichnet, dass** wenigstens einer der Strahlensensoren ein Bildsensor ist, mit dem wenigstens ein Bild des Objektes aufnehmbar ist.

7. Gerät nach einem der vorhergehenden Ansprüche, **dadurch gekennzeichnet, dass** ein zweiter oder mehrere Strahlensensoren (410, 420, 430) vorgesehen sind, die relativ zum ersten Strahlensensor (120) beabstandet in der gleichen Ebene und/oder im Winkel zu diesem angeordnet sind.

8. Gerät nach einem der vorhergehenden Ansprüche, **dadurch gekennzeichnet, dass** das Gerät eine Ausgabeeinrichtung (130) zum Ausgeben von wahrnehmbaren Informationen aufweist.

9. Gerät nach einem der vorhergehenden Ansprüche, **dadurch gekennzeichnet, dass** die wahrnehmbaren Informationen auf wenigstens einem Messwert wenigstens eines Strahlensensors (120) basieren, wobei der Messwert, insbesondere die Intensität der zweiten Strahlung angibt oder mit wenigstens einem Referenzwert verglichen wird.

10. Gerät nach einem der vorhergehenden Ansprüche, **dadurch gekennzeichnet, dass** die Ausgabeeinrichtung in Form eines am Gerät angeordneten Bildschirmes ausgebildet ist und/oder die Ausgabeeinrichtung die Information optisch und/oder akustisch und/oder spürbar ausgibt.

11. Gerät nach einem der vorhergehenden Ansprüche, **dadurch gekennzeichnet, dass** das Gerät aus der zweiten Strahlung den Abstand zur Reflexionoberfläche bestimmt.

12. Zahnmedizinisches Behandlungsset zum Bestrahlen eines Objektes, **gekennzeichnet durch** ein Gerät (210) nach einem der Ansprüche 1 bis 11 zum Anzeigen der gemessenen Strahlung mindestens eines Strahlensensors.

13. Behandlungsset nach einem der Ansprüche 10 bis 12, **dadurch gekennzeichnet, dass** eine Ladestation (330) zum Aufladen und/oder Lagern des Gerätes (210) vorgesehen ist.

14. Verfahren zum Härten eines Objekts, **dadurch gekennzeichnet, dass** die Schritte:
Bestrahlen des Dentalobjektes mit einer Strahlenquelle;
Messen der reflektierten Strahlung; und
Erfassen einer reflektierten Strahlung; und Erfassen einer relativen Position der Strahlenquelle zum Dentalobjekt basierend auf dem reflektierten Licht.
